# EUROPEAN PATENT SPECIFICATION

(11) **EP 2 857 270 B1**
(45) Date of publication and mention of the grant of the patent: **25.11.2020**
(21) Application number: 14185879.5
(22) Date of filing: 23.09.2014
(51) Int. Cl.: B60W 10/30, B60W 10/06, B60W 10/08, B60W 20/00, B60W 50/00

(54) **Energy management system in a vehicle and a method thereof**
Energieverwaltungssystem in einem Fahrzeug und Verfahren dafür
Système de gestion d'énergie dans un véhicule et procédé associé

(30) Priority: 30.09.2013 IN CH44532013
(43) Date of publication of application: 08.04.2015
(73) Proprietor: Robert Bosch GmbH, 70442 Stuttgart (DE); Robert Bosch Engineering And Business Solutions Limited, Bangalore 560 095 State of Karnataka (IN)
(72) Inventor: Vadagave, Sangamesh, 560043 Bangalore (IN)

(56) References cited:
- DE-A1- 10 334 535
- DE-A1- 19 709 317
- DE-A1-102006 026 404

## Description

**The following specification describes and ascertains the nature of this invention and the manner in which it is to be performed:**

### Field of the invention:

This invention relates to an energy management system in a vehicle and a method for managing the energy requirement in a vehicle as defined by the claims.

### Background of the invention:

DE19709317 discloses a method of distributing a first type of resource to consumers through a co-ordinator for that resource. Every resource is assigned a co-ordinator. The resource, the co-ordinator and the consumers are considered as one level. Similarly, another resource, its co-ordinator and the consumers from another level. The respective co-ordinator of a particular resource helps in resource distribution of the resource to its corresponding consumers. The higher order co-ordinator communicates with co-ordinators of the coupled resources at different levels for administering resources to consumers.

### Brief description of the drawing:

The present invention is described with reference to the following accompanying drawing:
Figure 1 illustrates an energy management system in accordance with one embodiment of the present invention;
The figure 2 is an example illustration of the invention; and

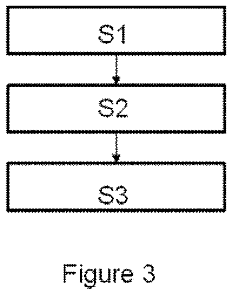

The figure 3 illustrates a method of the present invention.

### Detailed description of the drawing:

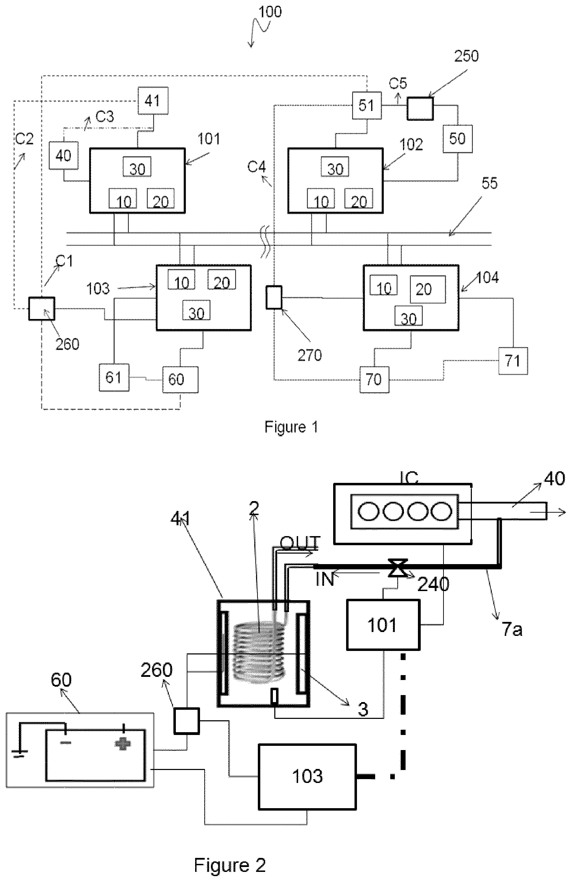

Figure 1 illustrates an example of an energy management system 100 in accordance with one embodiment of the present invention.

In accordance with one embodiment of the invention, the energy management system 100 is equipped in a vehicle (not shown). The vehicle comprises plurality of Electronic Control Units (ECUs) 101,102,103, 104 for controlling vehicle operation such as engine operation, emission control, cluster control, vehicle body control, battery management and the like. Plurality of energy generation devices 40, 50, 60, 70 are connected to respective electronic control units 101,102,103, 104. Plurality of energy consumption devices 41, 51, 61, 71 are connected to respective electronic control units 101,102,103, 104. Each electronic control unit 101,102,103, 104 is responsible for monitoring the energy generation from respective energy generation device and managing the energy dissipation by one or more energy consumption devices. Each electronic control unit 101,102,103, 104 comprises a reception means 10 for receiving an energy request from at least one of the plurality of ECUs, a prioritize unit 20 for determining priority of the received energy request from at least one of the plurality of ECUs; and a management unit 30 for managing supply of energy depending on the determined priority of the energy request from at least one of the plurality of ECUs. The plurality of the ECUs communicates each other via a vehicle network bus 55 such as Control Area Network (CAN), FlexRay, Ethernet and the like.

The Plurality of energy resources are for example electrical energy, kinetic energy, mechanical energy, heat energy and the like. The energy is either stored or generated during the engine operation of the vehicle. The electrical energy for example is a stored energy in a battery or generated using alternator during engine operation.

The energy management system defines the energy priority rules that are stored in each ECUs. Each energy resources are given the priority and this priority is also stored in the ECUs. The energy consumption devices may be connected with one or more energy resources for its operation and are controlled via plurality of energy distributing/routing channels C1, C2, C3, C4, C5. The routing channels may contain one or more controlling means 250, 260, 270 which are controlled by respective ECU's.

Each ECU 101,102,103, 104 monitors its energy resources for determining magnitude of energy that is generated, and magnitude of energy that has been dissipated or being dissipated by energy consuming devices, duration of the energy generated and if stored the remaining energy in the resource, duration of the energy that has been distributed to other energy consuming devices for dissipation and etc.

Whenever the energy consumption device governed by the ECU 101,102,103, 104 cannot meet its energy needs from its default/pre-decided energy resource, it can transmit an "Energy request" i.e. broadcast its energy requirement in the vehicle network bus 55.

The energy consumption device may require additional energy for its operation and the governing ECU may request this additional energy from other energy resources to achieve its functional success. The energy request is sent on the vehicle network bus 55 and all the ECUs may receive the request on the same vehicle network bus 55 or on a different vehicle network bus.

The energy request may include one or more of the following information but may not be limited to these:
a) Type of the requested energy (Heat, electrical, mechanical, kinetic, etc.).
b) Identification of the functional entity or Identification of the specific ECU initiating the energy request.
c) Magnitude of the requested energy (for example kilo joules, kilo watts or watts etc).
d) Time duration within which the "energy request" should be fulfilled to achieve functional success.

Each ECU 101,102,103, 104 receives energy request by reception means 10 from at least one of the plurality of ECUs and extracts the energy request information to the prioritize unit 20 for determining priority of the received energy request. The energy management unit 30 devises the energy supply strategies from the various energy resources depending on the prioritization of the energy request. Based on the priority, owner of the excess energy may respond to the requested ECU 101,102,103, 104 about its energy supply capability information. Each ECU is well aware of its own energy needs and is willing to distribute the excess energy available.

Based on pre-defined rules that are applied to the energy availability information -a decision can be taken by the energy management unit 30 as to which resource the energy will be sourced from. The energy availability information can be suitably extracted and stored in the form of a table or any other suitable data structure for easy reference and update. Once the energy sourcing decision is made, the necessary or corresponding energy routing related actuations/valve opening or closing actions will be carried out.

The owner of the excess energy may respond to the requested ECU 101,102,103, 104 for giving the additional energy within the requested time duration. Once the energy response is confirmed, the energy is distributed to the consuming device through the respective routing channels (C1, C2, C3, C4, C5).

The figure 2 is an example illustration of the invention for heating an aqueous solution in a tank. The aqueous solution is injected into the exhaust gas stream to reduce various oxides of nitrogen (NOx). The aqueous solution is injected using dosing module and controlled by control unit such as exhaust control unit 101. The aqueous solution has a freezing point of -11.5 degree Celsius. When the temperature is less than or equal to -11.5 degree Celsius the aqueous solution starts to freeze and cannot be used for exhaust gas treatment. To convert frozen aqueous solution into liquid, the aqueous tank 41 is fitted with an electrical heat element 3 or an exhaust heat element 2.

The electrical heat element 3 is heated electrically by supplying electrical energy from the electrical energy resource like battery. The energy from the battery is managed by a battery management unit 103. Electrical supply to the electrical heat element 3 is controlled through an electrical control means 260. The battery may be further connected to other electrical energy consumption devices such as air cooler, music system and the electronic control units and the like. The battery management unit 103 monitors the battery for determining the remaining energy in the battery and controlling the energy to other energy consumption devices based on the priority of the energy requirement.

Further, the aqueous solution can be heated by passing an exhaust heat to the exhaust heat element 2. The exhaust heat is supplied to the supply conduit 7a to heat the aqueous solution. The supply to the exhaust heat is controlled by a controlling means such as control valve 240 by the exhaust control unit 101.

It must be understood that the embodiments explained in the above detailed description in only illustrative and does not limit the scope of this invention. The scope of this invention is limited only by the scope of the claims. Many modification and changes in the embodiments aforementioned are envisaged. The scope of protection is defined by the claims.

## Claims

1. An energy management system (100) for a vehicle, said vehicle comprising plurality of electronic control units (101,102,103, 104) (ECUs) for controlling energy supply, said energy management system (100) comprising:
- a reception means (10) in each of said plurality of ECUs (101,102,103, 104) for receiving an energy request from at least one of said plurality of ECUs (101,102,103, 104), said energy request is transmitted on a vehicle network bus (55) by at least one of said plurality of ECUs (101,102,103, 104) when at least one energy consumption device (41,51,61,71) does not meet its energy needs;
- a prioritize unit (20) in each of said plurality of ECUs (101,102,103,104) for determining priority of the received energy request from at least one of said plurality of ECUs (101,102,103, 104); and
- an energy management unit (30) in each of said plurality of ECUs (101,102,103, 104) for managing supply of energy depending on said determined priority of said received energy request from at least one of said plurality of ECUs (101,102,103, 104).

2. The energy management system (100) according to the claim 1, wherein plurality of energy resources (40, 50, 60, 70) are controlled by said ECUs (101, 102, 103, 104).

3. An energy management system (100) according to the claim 2, wherein said plurality of energy resources (40, 50, 60, 70) are heat energy, electrical energy, kinetic energy, and mechanical energy.

4. The energy management system (100) according to the claim 1, wherein said each energy management unit (30) devises energy supply strategies, depending on said determined priority of said received energy request, from a plurality of energy resources (40, 50, 60, 70) that are associated to said plurality of ECUs (101,102,103, 104).

5. The energy management system (100) according to the claim 1, wherein said energy management unit (30) decides at least one energy resource of said plurality of energy resources (40, 50, 60, 70) based on predefined rules applied to an energy availability information.

6. An energy management method for a vehicle, said vehicle comprising plurality of Electronic Control Units (ECUs) (101,102,103, 104) for controlling energy supply, said method comprising:
- receiving (S1) an energy request, by a reception means (10), from at least one of said plurality of ECUs (101,102,103, 104), said energy request is transmitted on a vehicle network bus (55) by at least one of said plurality of ECUs (101,102,103, 104) when at least one energy consumption device (41,51,61,71) does not meet its energy needs;
- determining (S2) priority of the received energy request, by a prioritize unit (20) present in each of said plurality of ECUs (101, 102, 103, 104), from at least one of said plurality of ECUs (101,102,103, 104); and
- managing (S3) supply of energy, by an energy management unit (30) present in each of said plurality of ECUs (101,102,103, 104), depending on said priority of said energy request from at least one of said plurality of ECUs (101,102,103, 104).

7. The method according to the claim 6, wherein said energy is heat energy, electrical energy, kinetic energy and mechanical energy.

8. The method according to one of the preceding claim 6, wherein said energy request comprises type of the energy, identification of the energy requester, magnitude of the requested energy, time duration within which the energy supply is required.

## Patentansprüche

1. Energieverwaltungssystem (100) für ein Fahrzeug, wobei das Fahrzeug eine Vielzahl von elektronischen Steuergeräten (101, 102, 103, 104) (ECUs) zur Steuerung der Energieversorgung umfasst, wobei das Energieverwaltungssystem (100) umfasst:
- eine Empfangseinrichtung (10) in jedem der Vielzahl von ECUs (101, 102, 103, 104) zum Empfangen einer Energieanforderung aus mindestens einem der Vielzahl von ECUs (101, 102, 103, 104), wobei die Energieanforderung auf einem Fahrzeugnetzwerkbus (55) durch mindestens eines der Vielzahl von ECUs (101, 102, 103, 104) übertragen wird, wenn mindestens eine Energieverbrauchsvorrichtung (41, 51, 61, 71) nicht ihren Energiebedarf deckt;
- eine Priorisierungseinheit (20) in jeder der Vielzahl von ECUs (101, 102, 103, 104) zum Bestimmen der Priorität der empfangenen Energieanforderung aus mindestens einem der Vielzahl von ECUs (101, 102, 103, 104); und
- eine Energieverwaltungseinheit (30) in jeder der Vielzahl von ECUs (101, 102, 103, 104) zum Verwalten der Energiezufuhr in Abhängigkeit von der bestimmten Priorität der empfangenen Energieanforderung aus mindestens einem der Vielzahl von ECUs (101, 102, 103, 104) .

2. Energieverwaltungssystem (100) gemäß Anspruch 1, wobei eine Vielzahl von Energieressourcen (40, 50, 60, 70) durch die ECUs (101, 102, 103, 104) gesteuert werden.

3. Energieverwaltungssystem (100) gemäß Anspruch 2, wobei die Vielzahl von Energieressourcen (40, 50, 60, 70) Wärmeenergie, elektrische Energie, kinetische Energie und mechanische Energie sind.

4. Energieverwaltungssystem (100) gemäß Anspruch 1, wobei jede Energieverwaltungseinheit (30) Energieversorgungsstrategien in Abhängigkeit von der bestimmten Priorität der empfangenen Energieanforderung aus einer Vielzahl von Energieressourcen (40, 50, 60, 70) entwickelt, die mit der Vielzahl von ECUs (101, 102, 103, 104) verknüpft sind.

5. Energieverwaltungssystem (100) gemäß Anspruch 1, wobei die Energieverwaltungseinheit (30) mindestens eine Energieressource der Vielzahl von Energieressourcen (40, 50, 60, 70) basierend auf vordefinierten Regeln entscheidet, die auf eine Energieverfügbarkeitsinformation angewendet werden.

6. Energieverwaltungsverfahren für ein Fahrzeug, wobei das Fahrzeug eine Vielzahl von elektronischen Steuergeräten (ECUs) (101, 102, 103, 104) zum Steuern der Energieversorgung umfasst, wobei das Verfahren umfasst:
- Empfangen (S1) einer Energieanforderung aus mindestens einer der Vielzahl von ECUs (101, 102, 103, 104) durch eine Empfangseinrichtung (10), wobei die Energieanforderung durch mindestens eines der Vielzahl von ECUs (101, 102, 103, 104) auf einem Fahrzeugnetzwerkbus (55) übertragen wird, wenn mindestens eine Energieverbrauchsvorrichtung (41, 51, 61, 71) nicht ihren Energiebedarf deckt;
- Bestimmen (S2) der Priorität der empfangenen Energieanforderung aus mindestens einem der Vielzahl von ECUs (101, 102, 103, 104) durch eine in jedem der Vielzahl von ECUs (101, 102, 103, 104) vorhandene Priorisierungseinheit (20); und
- Verwalten (S3) der Energieversorgung durch eine Energieverwaltungseinheit (30), die in jeder der Vielzahl von ECUs (101, 102, 103, 104) vorhanden ist, in Abhängigkeit von der Priorität der Energieanforderung aus mindestens einem der Vielzahl von ECUs (101, 102, 103, 104) .

7. Verfahren gemäß Anspruch 6, wobei die Energie Wärmeenergie, elektrische Energie, kinetische Energie und mechanische Energie ist.

8. Verfahren gemäß einem von dem vorhergehenden Anspruch 6, wobei die Energieanforderung die Art der Energie, die Identifizierung des Energieanforderers, die Größe der angeforderten Energie, die Zeitdauer, innerhalb der die Energieversorgung erforderlich ist, umfasst.

## Revendications

1. Système (100) de gestion d'énergie pour un véhicule, ledit véhicule comportant une pluralité d'unités de commande électronique (101, 102, 103, 104) (ECU) servant à commander l'alimentation en énergie, ledit système (100) de gestion d'énergie comportant :
- un moyen (10) de réception dans chaque ECU de ladite pluralité d'ECU (101, 102, 103, 104) servant à recevoir une demande d'énergie provenant d'au moins une ECU de ladite pluralité d'ECU (101, 102, 103, 104), ladite demande d'énergie étant transmise sur un bus (55) de réseau de véhicule par au moins une ECU de ladite pluralité d'ECU (101, 102, 103, 104) lorsqu'au moins un dispositif (41, 51, 61, 71) de consommation d'énergie ne satisfait pas ses besoins en énergie ;
- une unité (20) de priorisation dans chaque ECU de ladite pluralité d'ECU (101, 102, 103, 104) servant à déterminer une priorité de la demande d'énergie reçue en provenance d'au moins une ECU de ladite pluralité d'ECU (101, 102, 103, 104) ; et
- une unité (30) de gestion d'énergie dans chaque ECU de ladite pluralité d'ECU (101, 102, 103, 104) servant à gérer l'alimentation en énergie en fonction de ladite priorité déterminée de ladite demande d'énergie reçue en provenance d'au moins une ECU de ladite pluralité d'ECU (101, 102, 103, 104).

2. Système (100) de gestion d'énergie selon la revendication 1, une pluralité de ressources (40, 50, 60, 70) d'énergie étant commandée par lesdites ECU (101, 102, 103, 104).

3. Système (100) de gestion d'énergie selon la revendication 2, ladite pluralité de ressources (40, 50, 60, 70) d'énergie étant de l'énergie thermique, de l'énergie électrique, de l'énergie cinétique, et de l'énergie mécanique.

4. Système (100) de gestion d'énergie selon la revendication 1, chacune desdites unités (30) de gestion d'énergie élaborant des stratégies d'alimentation en énergie, en fonction de ladite priorité déterminée de ladite demande d'énergie reçue, à partir d'une pluralité de ressources (40, 50, 60, 70) d'énergie qui sont associées à ladite pluralité d'ECU (101, 102, 103, 104).

5. Système (100) de gestion d'énergie selon la revendication 1, ladite unité (30) de gestion d'énergie décidant d'au moins une ressource d'énergie de ladite pluralité de ressources (40, 50, 60, 70) d'énergie d'après des règles prédéfinies appliquées à une information de disponibilité d'énergie.

6. Procédé de gestion d'énergie pour un véhicule, ledit véhicule comportant une pluralité d'unités de commande électronique (ECU) (101, 102, 103, 104) servant à commander l'alimentation en énergie, ledit procédé comportant :
- la réception (S1) d'une demande d'énergie, par un moyen (10) de réception, en provenance d'au moins une ECU de ladite pluralité d'ECU (101, 102, 103, 104), ladite demande d'énergie étant transmise sur un bus (55) de réseau de véhicule par au moins une ECU de ladite pluralité d'ECU (101, 102, 103, 104) lorsqu'au moins un dispositif (41, 51, 61, 71) de consommation d'énergie ne satisfait pas ses besoins en énergie ;
- la détermination (S2) d'une priorité de la demande d'énergie reçue, par une unité (20) de priorisation présente dans chaque ECU de ladite pluralité d'ECU (101, 102, 103, 104), en provenance d'au moins une ECU de ladite pluralité d'ECU (101, 102, 103, 104) ; et
- la gestion (S3) de l'alimentation en énergie, par une unité (30) de gestion d'énergie présente dans chaque ECU de ladite pluralité d'ECU (101, 102, 103, 104), en fonction de ladite priorité de ladite demande d'énergie provenant d'au moins une ECU de ladite pluralité d'ECU (101, 102, 103, 104).

7. Procédé selon la revendication 6, ladite énergie étant de l'énergie thermique, de l'énergie électrique, de l'énergie cinétique et de l'énergie mécanique.

8. Procédé selon l'une de la revendication précédente 6, ladite demande d'énergie comportant le type de l'énergie, une identification du demandeur d'énergie, la magnitude de l'énergie demandée, la durée pendant laquelle l'alimentation en énergie est requise.
